# EUROPEAN PATENT APPLICATION

(11) **EP 0 852 914 A2**
(43) Date of publication of application: **15.07.1998**
(21) Application number: 97203941.6
(22) Date of filing: 15.12.1997
(51) Int. Cl.: A23N 12/04

(54) **Device for treating potato products**

(30) Priority: 10.01.1997 NL 1004976
(71) Applicant: Kiremko B.V., 3417 XS Montfoort (NL)
(72) Inventor: Weijts, Jeroen, 3991 JB Houten (NL)
(74) Representative: Vollebregt, Cornelis Jacobus, Ir.

(57) **Abstract**

The invention relates to a device for treating potato products and the like, which device comprises a frame and a housing accommodating a conveyor screw which is capable of rotation about an at least substantially horizontal axis of rotation. The housing is provided near one end with an inlet for supplying the products to be treated, whilst a conveyor wheel being capable of rotation about an at least substantially horizontal axis of rotation is disposed at the end of the conveyor screw remote from the inlet. The conveyor wheel is provided with blades, by means of which products being supplied by the conveyor screw can be picked up by the conveyor wheel and be transported to an outlet. A journal is secured to the end of the conveyor screw located near the conveyor wheel, which journal is rotatably supported in a drum-shaped means, to the outer circumference of which the conveyor wheel is attached. The drum-shaped means is rotatably supported in the frame and is provided with means for rotating the drum-shaped means and the conveyor wheel attached thereto.

## Description

The invention relates to a device for treating potato products and the like, said device comprising a frame and a housing accommodating a conveyor screw which is capable of rotation about an at least substantially horizontal axis of rotation, wherein said housing is provided near one end with an inlet for supplying the products to be treated, whilst a conveyor wheel being capable of rotation about an at least substantially horizontal axis of rotation is disposed at the end of the conveyor screw remote from the inlet, which conveyor wheel is provided with blades, by means of which products being supplied to the conveyor wheel by the conveyor screw during operation can be picked up near the bottom side of the conveyor wheel and be transported to an outlet disposed at a higher location, and wherein said conveyor screw is provided near its end remote from the conveyor wheel with means for rotating the conveyor screw.

Devices of this kind, which are for example used for blanching cut and uncut potato products, are generally known. Usually the conveyor wheel is fixedly attached to the conveyor screw thereby, so that the conveyor screw and the conveyor wheel are conjointly driven at the same speed. When the device was being extended, a need was felt to drive the conveyor wheel independently of the conveyor screw, in order to make it possible to drive the conveyor wheel at a higher speed than the conveyor screw, so as to be able to carry off the large amount of products being supplied to the conveyor wheel by the conveyor screw in an effective manner, without having to use an overly large conveyor wheel. It has been proposed thereby to have the outer circumference of the conveyor wheel supported by a number of rollers, at least one of which was to be driven. This involves a risk of slip occurring between the driven roller and the outer circumference of the conveyor wheel, however, whereby the drive mechanism is liable to malfunction and the rotational speed of the conveyor wheel cannot be increased to a very high value, so that a comparatively large conveyor wheel is needed after all.

The object of the invention is to provide a device of the kind referred to above, wherein the conveyor wheel can be driven independently of the conveyor screw in an effective and efficient manner whilst avoiding the above drawbacks.

According to the invention this objective can be accomplished in that a journal is secured to the end of the conveyor screw located near the conveyor wheel, which journal is rotatably supported in a drum-shaped means, to the outer circumference of which the conveyor wheel is attached, whilst said drum-shaped means is rotatably supported in the frame and is provided with means for rotating the drum-shaped means and the conveyor wheel attached thereto.

An effective support of the conveyor wheel as well as the end of the conveyor screw located near said conveyor wheel can be realized by using the construction according to the invention, whilst the conveyor wheel can be driven in an effective manner and at a comparatively high rotational speed, for example by means of a chain, belt or gear transmission or the like, using a drive mechanism which is not liable to malfunction.

The invention will be explained in more detail hereafter with reference to an embodiment of the construction according to the invention diagrammatically indicated in the accompanying figures.

Figure 1 is a diagrammatic, perspective view of a device for treating potato products and the like.

Figure 2 is a diagrammatic view of the arrangement of the conveyor wheel.

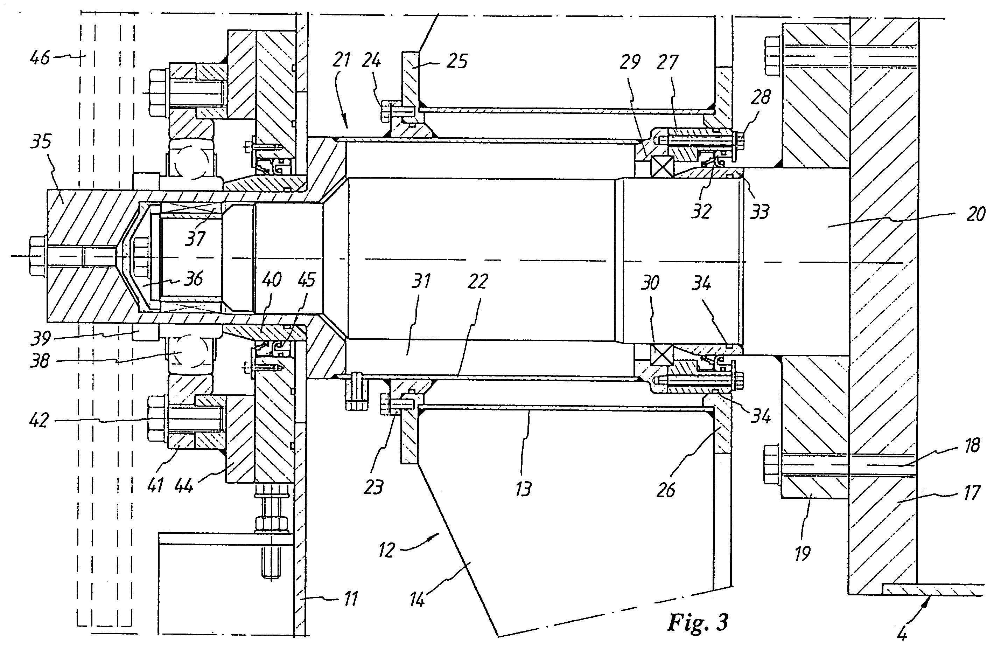

Figure 3 is a larger-scale sectional view of the support of the conveyor wheel and the end of the conveyor screw located near the conveyor wheel.

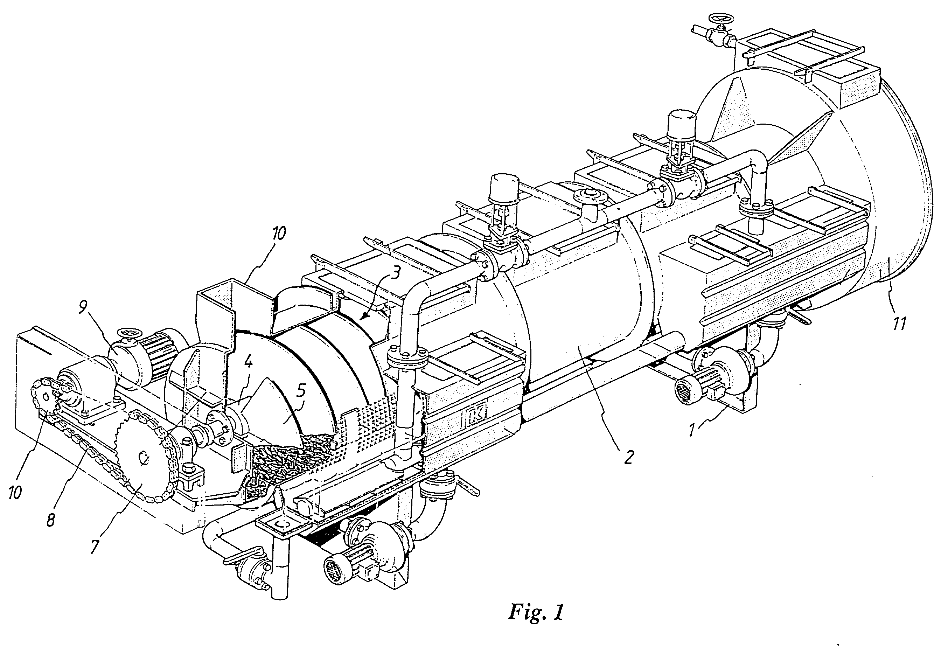

As is shown in Figure 1, the device comprises a frame 1, which supports an elongated cylindrical housing 2. A rotor 3 being capable of rotation about an at least substantially horizontal axis of rotation, which is conventionally built up of a central shaft 4 and a blade 5 helically provided round said shaft, is journalled in housing 2. In the illustrated embodiment a chain wheel 7 is attached to an end projecting from housing 2 of a journal 6 which is secured to conveyor screw 3. Said chain wheel 7 is coupled by means of a chain 8 a to a chain wheel 10 attached to the outgoing shaft of a drive motor 9, so that conveyor screw 3 can be rotated about its axis of rotation by means of motor 9 during operation.

Connected to the upper side of housing 2, near said end of the conveyor screw 3 provided with said journal 6, is a duct member 10, which constitutes an inlet via which products to be treated in the device can be supplied to the interior of housing 2.

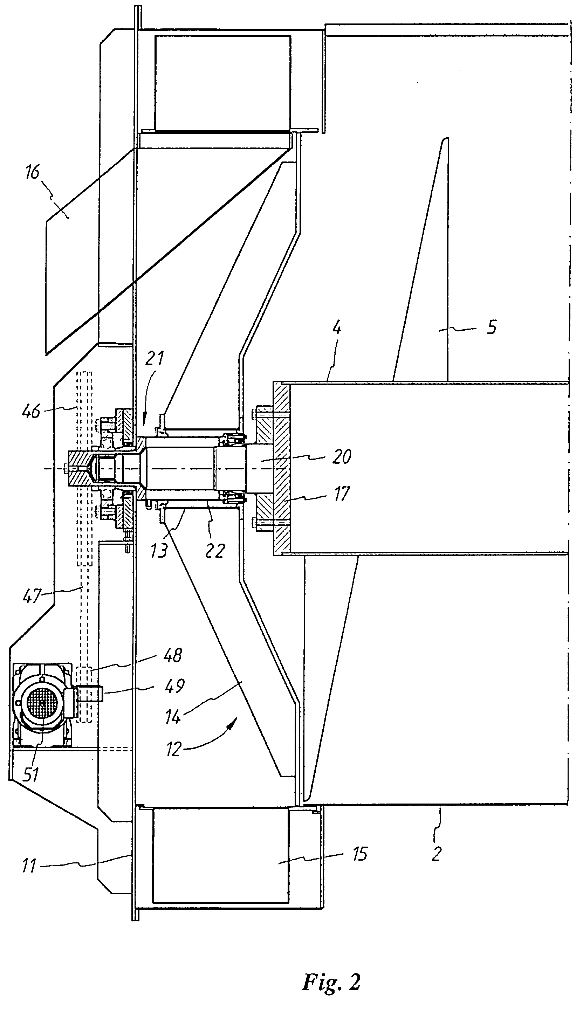

Furthermore a cylindrical housing 11 connects to the end of housing 2 remote from said inlet, which housing accommodates a conveyor wheel 12 (Figure 2). In the illustrated embodiment said conveyor wheel is provided with a central bush 13, to which a plurality of spokes 14 extending from bush 13 in the direction of the outer circumference of the conveyor wheel are attached. Attached to the ends of spokes 14 are blades 15, which blades move over a discharge chute 16 which is open at its upper end and which projects from housing 11, near the upper side of housing 11 upon rotation of the conveyor wheel during operation.

During operation drum 2 and the drum 11 connecting thereto will be filled to a certain level with a suitable fluid, which is maintained at a temperature suitable for treating the products during operation of the device. The products to be treated are charged to the interior of housing 2 via inlet 10, and transported through housing 2 from the left to the right, seen in Figure 1, in the direction of housing 11, by means of the conveyor screw 3 being rotated during operation. The products transported to within housing 11 by conveyor screw 3 are carried upwards out of the fluid by the blades 15 of the conveyor wheel 12 being rotated during operation, and discharged from the interior of the device via discharge chute 16. This is the usual construction and operation of a device to which the present invention relates.

According to the invention a flange 19 is attached to the end of shaft 4 located near conveyor wheel 12, more in particular to a plate 17 closing the respective end of hollow shaft 4, by means of bolts 18. Said flange 19 is integral with a journal 20, which is welded to said flange. Journal 20 extends through a drum-shaped means 21 in a direction away from shaft 4. Said drum-shaped means 21 is provided with a bush 22 concentrically surrounding journal 20, which bush is in turn surrounded along a large part of its length by the hub or bush 13 of conveyor wheel 12. Bush 22 is thereby surrounded, at a location some distance away from its end projecting beyond bush 13, by a ring 23 having a more or less L-shaped section, which is welded to bush 22. A flange 25 forming part of conveyor wheel 12, which is attached to one end of bush 13, is secured to ring 23 by means of bolts 24.

A flange 26, which likewise forms a part of the conveyor wheel, is attached to the other end of bush 13. Said flange surrounds an annular member 27, which is secured, by means of bolts 28, to a supporting ring 29, which is located in the interior of bush 13 and which is attached to one end of bush 22. Recesses for receiving the outer circumference of a ball bearing or roller bearing 30 disposed between said annular members 27, 29 and the outer circumference of journal 20 are provided in the facing ends of annular members 27 and 29. A chamber 31 formed between the outer circumference of journal 20 and the inner circumference of the bush 22 surrounding journal 20, in which chamber bearing 30 is located, is sealed from the interior of the housing 11 accommodating conveyor wheel 12 by means of sealing rings 32 which are known per se, which sealing rings are positioned between the inner circumference of annular member 27 and the outer circumference of a bush 33 surrounding journal 20, against which bearing 30 is supported. Further packings 34 are disposed between the inner circumference of bush 33 and the outer circumference of journal 20, and also between the outer circumference of annular member 27 and the flange 26 surrounding annular member 27.

Drum-shaped means 21 furthermore comprises a journal 35, which is secured to the end of bush 22 projecting beyond conveyor wheel 12, in which journal a bore 36 is provided. Positioned within said bore is the end of the journal 20 secured to conveyor screw 3, whereby said end of journal 20 is supported by a ball bearing or roller bearing 37, which is disposed between the outer circumference of journal 20 and the boundary wall of the bore 36 in journal 35.

Journal 35 is in turn supported by a ball bearing or roller bearing 38 surrounding journal 35, which bearing is retained between two annular members 39 and 40 surrounding said journal. Said bearing 38 is in turn surrounded by a supporting ring 41, which is attached, by means of bolts 42, to supporting plates 44 secured to housing 11. Packings 45 known per se, which surround the spacer sleeve 40, are disposed in a bore provided in a supporting plate 44 for sealing the housing accommodating conveyor wheel 12.

The arrangement is thereby such that the centres of the two ball bearings 37 and 38 lie in a plane extending perpendicularly to the central axis of journal 20, and thus also perpendicularly to the central axis of journal 35, which coincides with the aforesaid central axis.

Mounted on the free end of journal 35 is a chain wheel 46, which is coupled to a chain wheel 48 by means of a chain 47, said chain wheel 48 being mounted on the outgoing shaft 49 of a gearbox 50, to which a drive motor 51 is connected. It will be apparent that by means of said drive motor 51 journal 35, and thus the conveyor wheel 12 attached to said journal, can be driven at a desired speed, independently of the conveyor screw 3, during operation.

The drum-shaped means 21 supporting conveyor wheel 12 is supported in an effective manner, on the one hand on journal 20, by means of bearing 30, and on the other hand by the frame of the device, via bearing 38. Furthermore the journal 20 attached to conveyor screw 3 is in turn supported in an effective manner by the bearing 37 fitted over the end of journal 20, whereby the force exerted on bearing 37 via journal 20 is directly transferred to bearing 38 in a direction perpendicularly to the longitudinal axis of journal 20, thus preventing the occurrence of undesirable bending forces in the construction.

Furthermore it will be apparent, that the use of the construction makes it possible to realise a simple, robust construction of the drive mechanism for the conveyor wheel, whilst the components constituting the drive mechanism are effectively screened from the interior of the device containing food products, thus avoiding contamination of the products to be treated by means of the device.

## Claims

1. A device for treating potato products and the like, said device comprising a frame and a housing accommodating a conveyor screw which is capable of rotation about an at least substantially horizontal axis of rotation, wherein said housing is provided near one end with an inlet for supplying the products to be treated, whilst a conveyor wheel being capable of rotation about an at least substantially horizontal axis of rotation is disposed at the end of the conveyor screw remote from the inlet, which conveyor wheel is provided with blades, by means of which products being supplied to the conveyor wheel by the conveyor screw during operation can be picked up near the bottom side of the conveyor wheel and be transported to an outlet disposed at a higher location, and wherein said conveyor screw is provided near its end remote from the conveyor wheel with means for rotating the conveyor screw, characterized in that a journal is secured to the end of the conveyor screw located near the conveyor wheel, which journal is rotatably supported in a drum-shaped means, to the outer circumference of which the conveyor wheel is attached, whilst said drum-shaped means is rotatably supported in the frame and is provided with means for rotating the drum-shaped means and the conveyor wheel attached thereto.

2. A device according to claim 1, characterized in that said drum-shaped means is supported near one end by a bearing disposed between the inner circumference of said drum-shaped means and the outer circumference of the journal secured to the conveyor screw and, near the other end, by a bearing fitted round the outer circumference of said drum-shaped means and supported by the frame of the device.

3. A device according to claim 2, characterized in that the journal secured to the conveyor screw is supported near its end remote from the conveyor screw by a bearing disposed between the outer circumference of said journal and the inner circumference of said drum-shaped means.

4. A device according to claim 3, characterized in that the bearing disposed near the end of the journal remote from the conveyor screw and the bearing disposed round the outer circumference of the drum-shaped means and supported by the frame at least substantially lie in a plane extending perpendicularly to the longitudinal direction of said journal.
